# EUROPEAN PATENT APPLICATION

(11) **EP 4 451 685 A1**
(43) Date of publication of application: **23.10.2024**
(21) Application number: 23737337.8
(22) Date of filing: 02.01.2023
(51) Int. Cl.: H04N 21/2662, H04N 21/462, H04N 21/478, H04N 21/485

(54) **ELECTRONIC DEVICE, SERVER COMPUTER, AND OPERATING METHOD THEREFOR**

(30) Priority: 06.01.2022 KR 20220002350
(71) Applicant: Samsung Electronics Co., Ltd., Suwon-si, Gyeonggi-do 16677 (KR)
(72) Inventor: CHOI, Kilsoo, Suwon-si, Gyeonggi-do 16677 (KR); KIM, Sehyun, Suwon-si, Gyeonggi-do 16677 (KR); LEE, Jongin, Suwon-si, Gyeonggi-do 16677 (KR); PARK, Hyeeun, Suwon-si, Gyeonggi-do 16677 (KR)
(74) Representative: Walaski, Jan Filip
(86) International application number: PCT/KR2023/000043
(87) International publication number: WO 2023/132589

(57) **Abstract**

According to embodiments, provided are an electronic apparatus, a server computer, and an operating method of the electronic apparatus. The electronic apparatus of the disclosure is configured to receive, from a server computer, at least one frame including image quality setting information and/or at least one frame not including the image quality setting information, according to a frame processing mode selected from among an image quality priority mode and an input lag priority mode, with respect to the at least one frame including the image quality setting information, process a corresponding frame by referring to the image quality setting information included in the at least one frame and display the processed frame, and with respect to the at least one frame not including the image quality setting information, process the at least one frame not including the image quality setting information, by referring to image quality setting information about a previous frame of the at least one frame not including the image quality setting information, and display the at least one processed frame.

## Description

### Technical Field

Various embodiments relate to an electronic apparatus, a server computer, and an operating method of the electronic apparatus and the server computer, and more particularly, to an electronic apparatus capable of efficiently reducing latency that may occur when content is executed on the electronic apparatus, and an operating method of the electronic apparatus.

### Background Art

When content provided by a real-time two-way communication service is played, latency may occur between a server and a client device. In the case of game content provided by a real-time two-way communication service, latency may occur on a screen of game content displayed on the client device due to various reasons, such as performance of the client device that receives game content from the server and plays the game content, and a control operation or image quality processing in the client device. To reduce such latency, a gaming mode is provided, and in the gaming mode, the client device omits image quality processing or performs frame drops at a certain rate to eliminate latency. However, when image quality processing is omitted, image quality deteriorates, and when frame drops are performed, users may feel a sense of discomfort when viewing content. Accordingly, a method of appropriately performing the gaming mode considering a content execution situation or execution environment is required.

### Disclosure

### Technical Problem

Various embodiments provide an electronic apparatus capable of playing content by adaptively adjusting playback latency according to an execution situation of the content, a server computer, and an operating method of the electronic apparatus.

### Technical Solution

According to an embodiment, an electronic apparatus may include a communication interface, a memory to store one or more instructions, and a processor configured to execute the one or more instructions stored in the memory. According to an embodiment, the processor may be configured to execute the one or more instructions to receive, from a server computer, at least one frame including image quality setting information and/or at least one frame not including the image quality setting information, according to a frame processing mode selected from among an image quality priority mode in which content is processed by preferentially considering image quality over input lag time of the content and an input lag priority mode in which the content is processed by preferentially considering the input lag time over the image quality of the content. According to an embodiment, the processor may be configured to execute the one or more instructions to, with respect to the at least one frame including the image quality setting information, process a corresponding frame by referring to the image quality setting information included in the at least one frame and display the processed frame. According to an embodiment, the processor may be configured to execute the one or more instructions to, with respect to the at least one frame not including the image quality setting information, process the at least one frame not including the image quality setting information, by referring to image quality setting information about a previous frame of the at least one frame not including the image quality setting information, and display the at least one processed frame.

According to an embodiment, the processor may be configured to execute the one or more instructions to, in response to the selected frame processing mode being the image quality priority mode, receive frames, each frame including image quality setting information, and process a corresponding frame by referring to the image quality setting information included in each of the frames.

According to an embodiment, the processor may be configured to execute the one or more instructions to, in response to the selected frame processing mode being the input lag priority mode, receive, from the server computer, at least one first frame not including the image quality setting information and at least one second frame including the image quality setting information. According to an embodiment, the processor may be configured to execute the one or more instructions to, with respect to the at least one second frame including the image quality setting information, process the at least one second frame by referring to the image quality setting information included in the at least one second frame, and with respect to the at least one first frame not including the image quality setting information, process the at least one first frame by referring to image quality setting information about a previous frame of the at least one first frame.

According to an embodiment, the image quality setting information included in the at least one second frame may be image quality setting information generated corresponding to the at least one second frame or may be image quality setting information generated corresponding to a previous frame of the at least one second frame.

According to an embodiment, the processor may be configured to execute the one or more instructions to transmit, to the server computer, a user input of selecting one from among the image quality priority mode and the input lag priority mode.

According to an embodiment, a server computer may include a communication interface, a memory to store one or more instructions, and a processor configured to execute the one or more instructions stored in the memory. According to an embodiment, the processor may be configured to execute the one or more instructions to select, as a frame processing mode, one from among an image quality priority mode in which content is processed by preferentially considering image quality over input lag time of the content and an input lag priority mode in which the content is processed by preferentially considering the input lag time over the image quality of the content. According to an embodiment, the processor may be configured to execute the one or more instructions to, in response to the image quality priority mode being selected as the frame processing mode, prepare a frame including image quality setting information generated corresponding to each frame of the content. According to an embodiment, the processor may be configured to execute the one or more instructions to, in response to the input lag priority mode being selected as the frame processing mode, with respect to each frame of the content, prepare at least one frame not including the image quality setting information. According to an embodiment, the processor may be configured to execute the one or more instructions to transmit, through the communication interface, the frames of the content prepared according to the selected frame processing mode.

According to an embodiment, the processor may be configured to execute the one or more instructions to, in response to the input lag priority mode being selected as the frame processing mode, generate at least one first frame not including the image quality setting information and at least one second frame including image quality setting information generated corresponding to a previous frame.

According to an embodiment, the processor may be configured to execute the one or more instructions to receive, from the electronic apparatus, through the communication interface, an input of selecting one from among the image quality priority mode and the input lag priority mode.

According to an embodiment, an operating method of an electronic apparatus may include receiving, from a server computer, at least one frame including image quality setting information and/or at least one frame not including the image quality setting information, according to a frame processing mode selected from among an image quality priority mode in which content is processed by preferentially considering image quality over input lag time of the content and an input lag priority mode in which the content is processed by preferentially considering the input lag time over the image quality of the content. According to an embodiment, the operating method of the electronic apparatus may include, with respect to the at least one frame including the image quality setting information, processing a corresponding frame by referring to the image quality setting information included in the at least one frame, and displaying the processed frame. According to an embodiment, the operating method of the electronic apparatus may include, with respect to the at least one frame not including the image quality setting information, processing the at least one frame not including the image quality setting information, by referring to image quality setting information about a previous frame of the at least one frame not including the image quality setting information, and displaying the at least one processed frame.

According to an embodiment, an operating method of a server computer may include selecting, as a frame processing mode, one from among an image quality priority mode in which content is processed by preferentially considering image quality over input lag time of the content and an input lag priority mode in which the content is processed by preferentially considering the input lag time over the image quality of the content. According to an embodiment, the operating method of the server computer may include, in response to the image quality priority mode being selected as the frame processing mode, preparing a frame including image quality setting information generated corresponding to each frame of the content. According to an embodiment, the operating method of the server computer may include, in response to the input lag priority mode being selected as the frame processing mode, with respect to each frame of the content, preparing at least one frame not including the image quality setting information. According to an embodiment, the operating method of the server computer may include transmitting, through the communication interface, the frames of the content prepared according to the selected frame processing mode.

According to an embodiment, in a computer-readable recording medium having recorded thereon a program comprising one or more instructions to implement an operating method of an electronic apparatus on a computer, the operating method of the electronic apparatus may include receiving, from a server computer, at least one frame including image quality setting information and at least one frame not including the image quality setting information, according to a frame processing mode selected from among an image quality priority mode in which content is processed by preferentially considering image quality over input lag time of the content and an input lag priority mode in which the content is processed by preferentially considering the input lag time over the image quality of the content, with respect to the at least one frame including the image quality setting information, processing a corresponding frame by referring to the image quality setting information included in the at least one frame, and displaying the processed frame, and with respect to the at least one frame not including the image quality setting information, processing the at least one frame not including the image quality setting information, by referring to image quality setting information about a previous frame of the at least one frame not including the image quality setting information, and displaying the at least one processed frame.

### Advantageous Effects

According to various embodiments of the present disclosure, by more precisely managing latency of content, content playback may be provided to users without the inconvenience of input lag while maintaining image quality according to characteristics of the content.

### Description of Drawings

The present disclosure may be readily understood by combination of the following detailed description and accompanying drawings, where reference numerals refer to structural elements.
FIG. 1 is a reference diagram for describing an environment in which a method of reducing latency in an electronic apparatus 100 is employed, according to an embodiment.
FIG. 2 shows an example of a block diagram of an electronic apparatus according to an embodiment.
FIG. 3 is a detailed block diagram of an electronic apparatus 100 according to an embodiment.
FIG. 4 is a flowchart illustrating an example of operations of a server computer and an electronic apparatus, according to an embodiment.
FIG. 5 shows an example of a configuration of frame processing in a server computer 200, according to an embodiment.
FIG. 6 is a reference diagram for describing an example in which a frame is generated by processing the frame according to an image quality priority mode, according to an embodiment.
FIG. 7 is a reference diagram for describing an example in which a frame is generated by processing the frame according to an input lag priority mode, according to an embodiment.
FIG. 8 shows an example of a configuration of frame processing in the electronic apparatus 100, according to an embodiment.
FIG. 9 is a reference diagram for describing an example in which a frame is displayed by processing the frame according to an image quality priority mode, according to an embodiment.
FIG. 10 is a reference diagram for describing an example in which a frame is displayed by processing the frame according to an input lag priority mode, according to an embodiment.
FIG. 11 is a flowchart illustrating an example of operations of a server computer and an electronic apparatus, according to an embodiment.

### Mode for Invention

The terms used in the present specification will be briefly defined, and the present disclosure will be described in detail.

The terms used in the present disclosure are those general terms currently widely used in the art in consideration of functions in regard to the present disclosure, but the terms may vary according to the intention of those of ordinary skill in the art, precedents, or new technologies in the art. Also, some terms may be arbitrarily selected by the applicant, and in this case, the meaning of the selected terms will be described in detail in the detailed description of the disclosure. Thus, the terms used in the present disclosure should be understood not as simple names but based on the meaning of the terms and the overall description of the disclosure.

Throughout the specification, when a portion "includes" a component, another component may be further included, rather than excluding the existence of the other component, unless otherwise described. In addition, terms such as "...or/er", "...module", or the like refer to units that perform at least one function or operation, and the units may be implemented as hardware or software or as a combination of hardware and software.

Hereinafter, embodiments of the disclosure will be described in detail with reference to the accompanying drawings such that one of ordinary skill in the art may easily implement the disclosure. The present disclosure may, however, be embodied in many different forms and should not be construed as limited to the embodiments of the disclosure set forth herein. In addition, components not related to description are omitted in the drawings for clear description of the present disclosure, and like reference numerals in the drawings denote like components throughout the specification.

As used in the embodiments of the present specification, the term "user" may refer to a person who controls a function or operation of a computing apparatus or electronic apparatus by using a control apparatus, and may include a viewer, a manager, or an installation engineer.

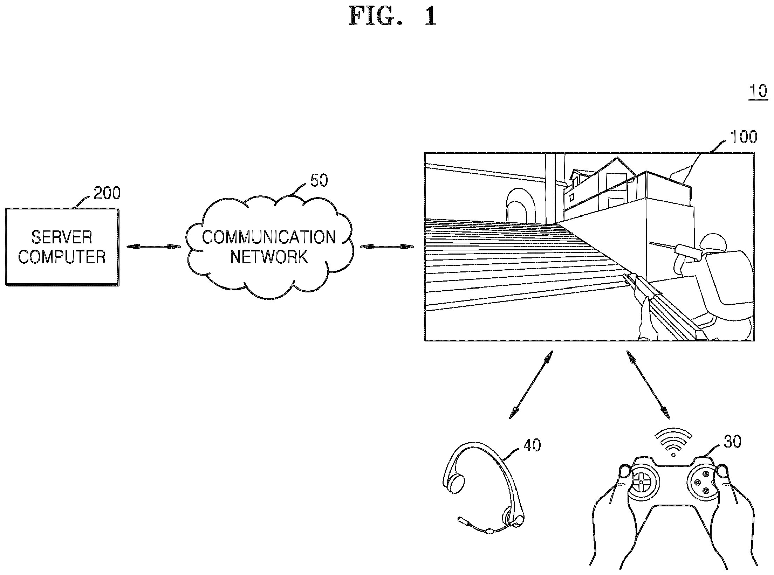

FIG. 1 is a reference diagram for describing an environment in which a method of reducing latency in an electronic apparatus 100 is employed, according to an embodiment.

Referring to FIG. 1, an environment 10 may include the electronic apparatus 100, a communication network 50, and a server computer 200.

The server computer 200 may be connected to the electronic apparatus 100 through the communication network 50.

The server computer 200 is an entity configured to provide various types of content. When a content request is received from the electronic apparatus 100, the server computer 200 may be configured to provide requested content to the electronic apparatus 100 through the communication network 50. Various types of content may include, for example, video content, audio content, real-time two-way communication service content, etc. The real-time two-way communication service content is provided by the server computer 200 to the electronic apparatus 100, and the server computer 200 is also configured to receive control data controlled by a user of the electronic apparatus 100 and perform an operation corresponding to the control data, and thus, the real-time two-way communication service content may refer to content provided by a real-time two-way communication service. The real-time two-way communication service content may include, for example, game content or video content whose story or scenario changes under control by the user.

The electronic apparatus 100 is an entity configured to display various types of content. The electronic apparatus 100 may be configured to request content from the server computer 200, and when the requested content is received from the server computer 200 through the communication network 50, display the received content. For example, when the electronic apparatus 100 receives game content from the server computer 200 and displays the game content, the user of the electronic apparatus 100 may control the game content displayed on the electronic apparatus 100. The game content may include video content and audio content. The electronic apparatus 100 may be configured to display the video content included in the game content on a display of the electronic apparatus 100. The electronic apparatus 100 may be configured to output the audio content included in the game content through a speaker provided in the electronic apparatus 100 or an audio output apparatus connected to the electronic apparatus 100, for example, a headset 40. The user of the electronic apparatus 100 may play a game by controlling the game content while viewing the game content displayed on the display of the electronic apparatus 100. The user may control the game content by using various controllers. For example, the user of the electronic apparatus 100 may control the game content by using a game controller 30, which is wirelessly connected via communication with the electronic apparatus 100.

The electronic apparatus 100 may refer to an apparatus that includes a display and may be configured to display image content, video content, game content, graphic content, etc. The electronic apparatus 100 may include various types of electronic apparatuses configured to receive and output content, such as a network television (TV), a smart TV, an Internet TV, a web TV, an Internet protocol TV (IPTV), and a personal computer (PC). The electronic apparatus 100 may be referred to as an electronic apparatus in that the electronic apparatus 100 receives and displays content, and may also be referred to as a content reception apparatus, a sink apparatus, an electronic apparatus, or a computing apparatus.

The electronic apparatus 100 may be configured to display various types of real-time two-way communication service content. For example, the real-time two-way communication service content may include game content.

In response to receiving a content execution request from the user, the electronic apparatus 100 may be configured to play content requested to be executed. When the content requested to be executed is content displayed by a server computer and a real-time two-way communication service, content latency may occur during execution of the content. The latency may refer to a delay that occurs according to the time required for the server computer 200 to process content to transmit the content to the electronic apparatus 100, the time required for content to be transmitted from the server computer 200 to the electronic apparatus 100, and the time required for the electronic apparatus 100 to process content received from the server computer 200. The latency may occur not only due to a difference in network environment or electronic apparatus performance, including decoding speed, of the electronic apparatus 100, but also due to a processing operation for image quality setting information added to a content frame in the server computer.

In order to adaptively perform image quality processing of content according to characteristics of each scene, a technology that performs image quality processing for each frame constituting the content may be applied. An example of the technology that performs image quality processing for each content frame may be HDR10+.

High dynamic range (HDR) is a technology that expands the range of brightness from the brightest to the darkest as close as possible to what the human eye sees. A difference between HDR10 and HDR10+ lies in metadata including data such as color and brightness information stored in content, such as an image, game, or TV application. HDR10 uses static metadata in which the same color and brightness are applied even when scenes change, and accordingly, the quality of images is bound to deteriorate in very dark or bright scenes. In contrast, in HDR10+, dynamic metadata that automatically sets metadata for each scene is applied such that all scenes may be provided with optimized image quality. That is, HDR10+ provides, as basic information, pixel statistical data optimized for each scene and provides, as optional data, a reference tone mapping curve optimized for each scene. Such information may help consistently display an original image on display apparatuses having various characteristics.

In an environment where the electronic apparatus 100 receives a content stream from the server computer 200 and displays the content stream, the server computer 200 may include, in each frame, image quality setting information appropriate for each frame of the content stream. To this end, the server computer 200 analyzes a scene corresponding to a frame and performs a task of including image quality setting information appropriate for an image of the scene on a frame-by-frame basis. Such a process may take several ms to tens of ms. For a video stream of content at 60 frame per second (fps), the time required to play one frame is 16 ms. When the time of a process for analyzing a frame and inserting image quality setting information exceeds 16 ms, a delay corresponding to the excess time may occur. As described above, when a process of inserting image quality data into the video stream of the content takes tens of ms, this exceeds playback time of one frame of a 60 fps video, and thus, a time delay may occur. In particular, in the case of games, a time delay may occur after a key of a game controller is input until a response corresponding to the input key is displayed on a screen. This is called input lag, and as the time difference increases, a delay felt by a user may increase.

As described above, in order to solve an input lag problem caused by the processing of image quality setting information for each frame in the server computer, a server computer and electronic apparatus for adaptively processing image quality setting information, which is a result of analyzing each content frame according to characteristics of the content, are provided.

The electronic apparatus 100 may provide various image quality modes that may be supported when content received from the server computer 200 is streamed. An image quality mode may increase or lower image quality settings by reducing or increasing steps by using a combination of various setting values that may be set in the electronic apparatus 100, and the time required for setting may be adjusted accordingly. For example, as game content, a first person shooter (FPS) game, which refers to a shooting game in which battles occur by using weapons or tools on the same screen as a player's point of view or a user's point of view to see objects, and a role playing game (RPG), which refers to a role-playing game in which users enjoy playing characters in the game, will be considered. FPS games are games that require a quick response to an input from a game player. In these games, response time is more important than high image quality, and thus, input lag needs to be small. In contrast, in the case of RPG games, input lag for inputs is relatively unimportant. Therefore, even when there is some input lag, providing higher image quality may provide better service to game players.

According to various embodiments, the electronic apparatus 100 and the server computer 200 may provide an "image quality priority mode" in which image quality processing is relatively more important than input latency, and an "input lag priority mode" in which the input latency is considered as a priority rather than the image quality processing of an image. For example, the input lag priority mode may be applied to content such as FPS games, and the image quality priority mode may be applied to content such as RPG games.

According to an embodiment, the server computer 200 may selectively provide the image quality priority mode and the input lag priority mode as a frame processing mode for processing frames of content, process the frames of the content according to the selected frame processing mode, and provide the processed frames of the content to the electronic apparatus 100.

According to an embodiment, as the image quality priority mode is selected as the frame processing mode, with respect to frames of the content, the server computer 200 may generate, for each frame, image quality setting information corresponding to each frame, insert the image quality setting information into each frame, and provide the image quality setting information to the electronic apparatus 100. In this case, because image quality is analyzed for each frame and image quality setting information is generated and inserted, input latency may increase. The image quality setting information may also be referred to as metadata.

According to an embodiment, as the input latency priority mode is selected as the frame processing mode, the server computer 200 may transmit to the electronic apparatus 100 one or more frames without inserting the image quality setting information into the one or more frames, to prevent input latency from occurring, when frame processing requires time. For example, when there is no time to analyze a first frame to generate image quality setting information and then insert the image quality setting information into the first frame, the server computer 200 may output the first frame as is without inserting the image quality setting information, and insert image quality setting information about the first frame into a second frame and output the second frame.

According to an embodiment, when the server computer 200 provides content to the electronic apparatus 100, the server computer 200 may analyze the type of content to be provided, determine a frame processing mode, and process frames of the content according to the determined frame processing mode.

According to an embodiment, when provision of content starts or while content is output, the server computer 200 may receive information about the frame processing mode from the electronic apparatus 100 and adaptively change frame processing according to the received frame processing mode. For example, while the server computer selects the image quality priority mode as the frame processing mode according to the type of content, processes frames of the content according to the image quality priority mode, and transmits the processed frames to the electronic apparatus 100, the server computer may receive a command to change to the input lag priority mode from the electronic apparatus 100. In response to the command, the server computer 200 may change the frame processing mode to the input lag priority mode, process the frames of the content according to the changed input lag priority mode, and transmit the frames of the content to the electronic apparatus 100.

According to an embodiment, the electronic apparatus 100 may receive, from the server computer 200, frames of the content processed according to a frame processing mode from among the input lag priority mode or the image quality priority mode, and perform image quality processing of the received frames of the content based on the frame processing mode.

According to an embodiment, the electronic apparatus 100 may receive frames of the content processed according to the image quality priority mode, extract, from each of the received frames, image quality setting information corresponding to each frame, and perform image quality processing of each frame according to the extracted image quality setting information.

According to an embodiment, the electronic apparatus 100 may receive frames of the content processed according to the input lag priority mode. The frames processed according to the input lag priority mode may include or not include image quality information. When the electronic apparatus 100 extracts corresponding image quality setting information from a received frame, the electronic apparatus 100 may perform image quality processing of the corresponding frame according to the extracted image quality setting information. When the corresponding image quality setting information is not extracted from the received frame, the electronic apparatus 100 may process the corresponding frame without image quality processing according to the image quality setting information or may perform image quality processing of the corresponding frame by referring to image quality setting information about a previous frame. In detail, in a case where a frame does not include image quality setting information, when there is not much change in images between a current frame and a previous frame, the electronic apparatus 100 may perform image quality processing of the corresponding frame by referring to image quality setting information about the previous frame. Also, when the current frame has a large change in images from the previous frame, the electronic apparatus 100 may process the corresponding frame without referring to the image quality setting information.

According to an embodiment, the electronic apparatus 100 may receive a user input for selecting a frame processing mode from among the input lag priority mode and the image quality priority mode, transmit, to the server computer 200, information about the frame processing mode selected in response to the received user input, and receive frames of the content processed according to the frame processing mode selected in response to the user input.

According to the embodiments of the disclosure as described above, by varying the frame processing mode according to characteristics of the content or user selection, in situations where image quality is important, the frames are processed with image quality processing as a priority such that higher-quality images may be provided to the user. In situations where input latency is important, the frames are processed to ensure faster response time rather than image quality processing such that faster images may be provided to the user without input lag.

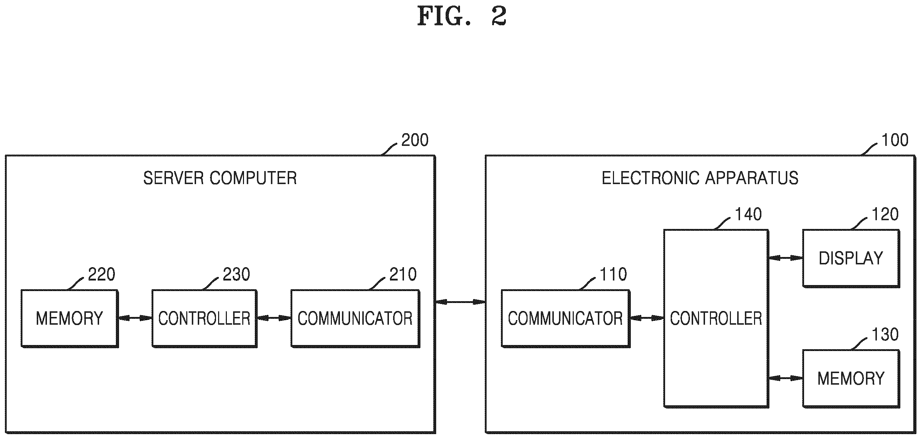

FIG. 2 shows an example of a block diagram of an electronic apparatus according to an embodiment.

Referring to FIG. 2, the electronic apparatus 100 may include a communicator 110, a display 120, a memory 130, and a controller 140.

The communicator 110 may be configured to receive, according to a communication protocol, content received from the server computer 200 under control by the controller 140.

The display 120 may display, on a screen, the content received from the server computer 200.

The memory 130 may store programs related to the operation of the electronic apparatus 100 and various types of data generated during the operation of the electronic apparatus 100.

The controller 140 may be configured to control overall operations of the electronic apparatus 100, process the content received from the server computer 200, and control to display the processed content on the display 120.

According to an embodiment, in the electronic apparatus, the controller 140 may be configured to execute one or more instructions to control to receive, from the server computer, at least one frame including image quality setting information and at least one frame not including image quality setting information, according to a frame processing mode selected from among an image quality priority mode in which content is processed by preferentially considering image quality over input lag time of the content and an input lag priority mode in which content is processed by preferentially considering the image quality over the input lag time of the content, with respect to the at least one frame including the image quality setting information, process a corresponding frame by referring to the image quality setting information included in the at least one frame, and display the processed frame, and with respect to the at least one frame not including the image quality setting information, process a frame not including the image quality setting information by referring to image quality setting information about a previous frame of the at least one frame not including the image quality setting information, and display the processed frame.

According to an embodiment, the controller 140 may be configured to execute the one or more instructions to, in response to the selected frame processing mode being the image quality priority mode, receive frames, each frame including image quality setting information, and process a corresponding frame by referring to the image quality setting information included in each of the frames.

According to an embodiment, the controller 140 may be configured to execute the one or more instructions to, in response to the selected frame processing mode being the input lag priority mode, receive, from the server computer, at least one first frame not including the image quality setting information and at least one second frame including the image quality setting information, with respect to the second frame including the image quality setting information, process the second frame by referring to the image quality setting information included in the second frame, and with respect to the first frame not including the image quality setting information, process the first frame by referring to image quality setting information about a previous frame of the first frame.

The image quality setting information included in the second frame may be image quality setting information generated corresponding to the second frame or may be image quality setting information generated corresponding to a previous frame of the second frame.

According to an embodiment, the controller 140 may be configured to execute the one or more instructions to transmit, to the server computer, a user input of selecting one of the image quality priority mode and the input lag priority mode.

The server computer 200 may include a communicator 210, a memory 220, and a controller 230.

The communicator 210 may be configured to transmit, to the electronic apparatus 100, content according to a communication protocol under control by the controller 230.

The memory 220 may store programs related to the operation of the server computer 200 and various types of data generated during the operation of the server computer 200.

The controller 230 may be configured to control overall operations of the server computer 200 and process frames of the content to be transmitted to the electronic apparatus 100.

According to an embodiment, the controller 230 may be configured to execute the one or more instructions to select, as a frame processing mode, one of an image quality priority mode in which content is processed by preferentially considering image quality over input lag time of content and an input lag priority mode in which content is processed by preferentially considering the image quality over the input lag time of the content, in response to the image quality priority mode being selected as the frame processing mode, prepare a frame including image quality setting information generated corresponding to each frame of the content, in response to the input lag priority mode being selected as the frame processing mode, with respect to each frame of the content, prepare at least one frame not including image quality setting information, and transmit, to the electronic apparatus, through the communicator 210, the frames of the content provided according to the selected frame processing mode.

According to an embodiment, the controller 230 may be configured to execute the one or more instructions to, in response to the input lag priority mode being selected as the frame processing mode, generate at least one first frame not including the image quality setting information and at least one second frame including image quality setting information generated corresponding to a previous frame.

According to an embodiment, the controller 230 may be configured to execute the one or more instructions to receive, from the electronic apparatus, through the communicator 210, an input of selecting one of the image quality priority mode and the input lag priority mode.

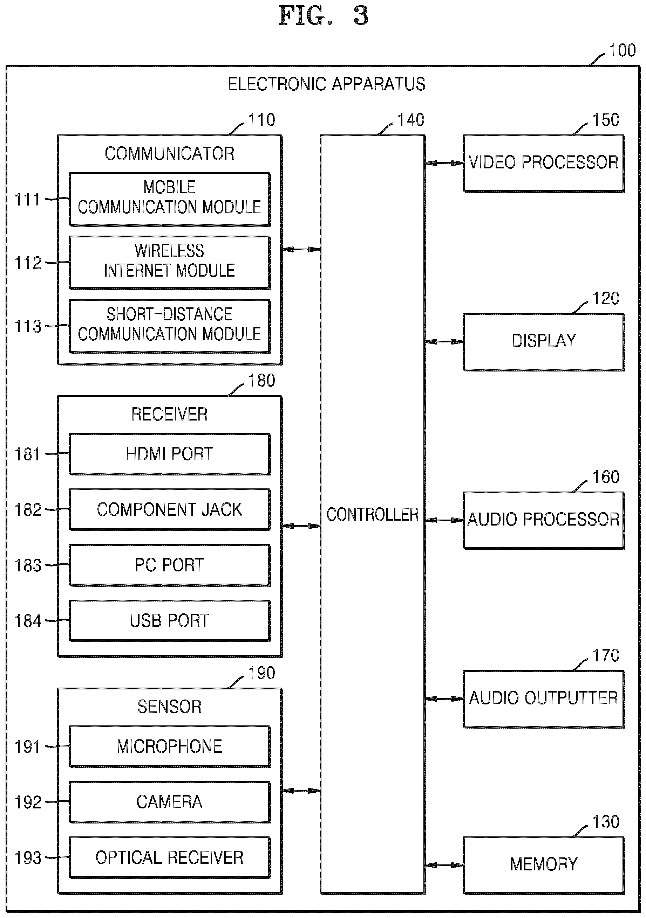

FIG. 3 is a detailed block diagram of an electronic apparatus 100 according to an embodiment.

Referring to FIG. 3, the electronic apparatus 100 may include, in addition to the communicator 110, the display 120, the memory 130, and the controller 140, a video processor 150, an audio processor 160, an audio outputter 170, a receiver 180, and a sensor 190.

The communicator 110 may include one or more modules configured to enable wireless communication between the electronic apparatus 100 and a wireless communication system or between the electronic apparatus 100 and a network where another electronic apparatus is located. For example, the communicator 110 may include a mobile communication module 111, a wireless Internet module 112, and a short-range communication module 113.

The mobile communication module 111 transmits or receives, via a mobile communication network, a wireless signal to or from at least one of a base station, an external terminal, or a server. The wireless signal may include various types of data based on transmission and reception of voice call signals, video call signals, or text/multimedia messages.

The wireless Internet module 112 refers to a module for wireless Internet access and may be built into or external to a device. For wireless Internet technology, wireless local area network (WLAN) (wireless fidelity (Wi-Fi)), wireless broadband (WiBro), world interoperability for microwave access (WiMAX), high speed downlink packet access (HSDPA), or the like may be used. The device may establish a Wi-Fi (peer to peer (P2P)) connection with another device through the wireless Internet module 112. The electronic apparatus 100 may communicate with the server computer 200 through the wireless Internet module 112.

The short-range communication module 113 refers to a module for short-range communication. For short-range communication technology, Bluetooth, Bluetooth low energy (BLE), radio frequency identification (RFID), infrared communication (infrared data association (IrDA), ultra-wideband (UWB), ZigBee, or the like may be used.

According to an embodiment, the communicator 110 may be configured to, under the control by the controller 140, request the server computer 200 to transmit content requested to be executed, and receive, from the server computer 200, frames of the content requested to be executed.

The video processor 150 may be configured to, under the control by the controller 140, process an image signal received from the receiver 180 or the communicator 110 and output the image signal to the display 120.

According to an embodiment, the video processor 150 may include a main buffer configured to receive frames corresponding to the content, a decoder configured to decode the frames output from the main buffer, and a frame processor configured to process the decoded frames.

The display 120 may be configured to display, on a screen, the image signal received from the video processor 150.

The audio processor 160 may be configured to, under the control by the controller 140, convert an audio signal received from the receiver 180 or the communicator 110 into an analog audio signal and output the analog audio signal to the audio outputter 170.

The audio outputter 170 may be configured to output the received analog audio signal through a speaker.

The receiver 180 may be configured to receive a video (e.g., moving images, etc.), audio (e.g., speech, music, etc.), and additional information (e.g., an electronic program guide (EPG), etc.) from the outside of the electronic apparatus 100 under the control by the controller 140. The receiver 180 may include one or a combination of one or more of a high-definition multimedia interface (HDMI) port 181, a component jack 182, a PC port 183, and a universal serial bus (USB) port 184. In addition to the HDMI port, the receiver 180 may further include a display port (DP), a thunderbolt, and a mobile high-definition link (MHL).

The sensor 190 may sense speech of a user, an image of the user, or interaction of the user and may include a microphone 191, a camera 192, and an optical receiver 193. The microphone 191 may be configured to receive speech uttered by the user, convert the received speech into an electrical signal, and output the electrical signal to the processor 160. The camera 192 may receive an image (e.g., consecutive image frames) corresponding to a motion of the user including a gesture in a range identifiable by a camera. The optical receiver 193 receives an optical signal (including a control signal) received from a remote control apparatus. The optical receiver 193 may receive an optical signal corresponding to a user input (e.g., a touch, a press, a touch gesture, a speech, or a motion) from the remote control apparatus. A control signal may be extracted from the received optical signal under control by the processor 160.

According to an embodiment, the memory 130 may store programs for processing and controlling by the controller 140 and store data input to the electronic apparatus 100 or output from the electronic apparatus 100.

The memory 130 may include at least one type of storage medium from among a flash memory, hard disk, multimedia card micro type memory, card type memory (e.g., secure digital (SD) or extreme digital (XD) memory), random access memory (RAM), static RAM (SRAM), read-only memory (ROM), electrically erasable programmable ROM (EEPROM), programmable ROM (PROM), magnetic memory, magnetic disk, and optical disk.

The controller 140 may be configured to control overall operations of the electronic apparatus 100. For example, the controller 140 may be configured to execute one or more instructions stored in the memory 130, to perform functions of the electronic apparatus 100 set forth in the present disclosure.

In an embodiment of the present disclosure, the controller 140 may be configured to execute the one or more instructions stored in the memory 130, to control the aforementioned operations to be performed. In this case, the memory 130 may store one or more instructions executable by the controller 140.

Also, in an embodiment of the present disclosure, the controller 140 may be configured to store one or more instructions in an internal memory and execute the one or more instructions stored in the internal memory to control the aforementioned operations to be performed. That is, the controller 140 may be configured to perform a certain operation by executing at least one instructions or programs stored in the memory 130 or the internal memory provided inside the controller 140.

Also, in FIG. 3, the controller 140 may include one or more processors. In this case, each of operations performed by the electronic apparatus according to the embodiment of the present disclosure may be performed through at least one of a plurality of processors.

According to an embodiment, in the electronic apparatus, the controller 140 may be configured to execute one or more instructions to control to receive, from the server computer, at least one frame including image quality setting information and at least one frame not including image quality setting information, according to a frame processing mode selected from among an image quality priority mode in which content is processed by preferentially considering image quality over input lag time of the content and an input lag priority mode in which content is processed by preferentially considering the image quality over the input lag time of the content, with respect to the at least one frame including the image quality setting information, process a corresponding frame by referring to the image quality setting information included in the at least one frame, and display the processed frame, and with respect to the at least one frame not including the image quality setting information, process a frame not including the image quality setting information by referring to image quality setting information about a previous frame of the at least one frame not including the image quality setting information, and display the processed frame.

According to an embodiment, the controller 140 may be configured to execute the one or more instructions to, in response to the selected frame processing mode being the image quality priority mode, receive frames, each frame including image quality setting information, and process a corresponding frame by referring to the image quality setting information included in each of the frames.

According to an embodiment, the controller 140 may be configured to execute the one or more instructions to, in response to the selected frame processing mode being the input lag priority mode, receive, from the server computer, at least one first frame not including the image quality setting information and at least one second frame including the image quality setting information, with respect to the second frame including the image quality setting information, process the second frame by referring to the image quality setting information included in the second frame, and with respect to the first frame not including the image quality setting information, process the first frame by referring to image quality setting information about a previous frame of the first frame.

The image quality setting information included in the second frame may be image quality setting information generated corresponding to the second frame or may be image quality setting information generated corresponding to a previous frame of the second frame.

According to an embodiment, the controller 140 may be configured to execute the one or more instructions to transmit, to the server computer, a user input of selecting one of the image quality priority mode and the input lag priority mode.

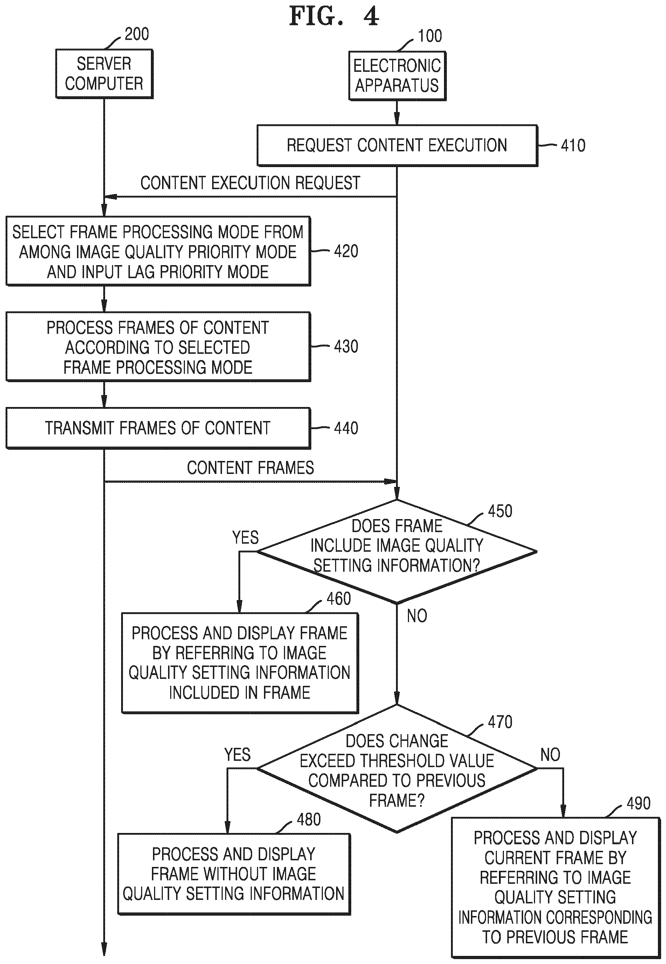

FIG. 4 is a flowchart illustrating an example of operations of a server computer and an electronic apparatus, according to an embodiment.

Referring to FIG. 4, in operation 410, the electronic apparatus 100 may be configured to receive an input requesting content execution. In addition, such a content execution request may be transmitted to the server computer 200.

In operation 420, the server computer 200 may be configured to select a frame processing mode from among an image quality priority mode and an input lag priority mode. The image quality priority mode may refer to a frame processing mode in which image quality processing is relatively preferentially considered than input latency, and the input lag priority mode may refer to a frame processing mode in which input latency is relatively preferentially considered than image quality processing of an image.

According to an embodiment, the server computer 200 may be configured to select the frame processing mode based on characteristics of content requested to be executed from the electronic apparatus 100. In detail, when the characteristics of the content requested to be executed indicate that, for the content, image quality processing needs to be considered more important than input latency, the server computer 200 may be configured to select the image quality priority mode as the frame processing mode. When the characteristics of the content requested to be executed indicate that, for the content, input latency needs to be considered more important than image quality processing, the server computer 200 may be configured to select the input lag priority mode as the frame processing mode. For example, in the case of game content such as RPG, the server computer 200 may be configured to select the image quality priority mode to preferentially consider image quality processing. For example, in the case of game content such as FPS, the server computer 200 may be configured to select the input lag priority mode to preferentially consider input lag.

According to an embodiment, the server computer 200 may be configured receive, from the electronic apparatus 100, a frame processing mode for the content requested to be executed, according to the degree of execution progress of the corresponding content. Even within one piece of content, according to the degree of progress, there may be portions where input lag is important and portions where input lag is less important. Even within one piece of content, the server computer 200 may be configured to perform frame processing according to the input lag priority mode in the portions where input lag is more important, and perform frame processing according to the image quality priority mode in the portions where input lag is less important. For example, in the case of game content, there may be a trailer portion and an actual game execution portion. In this case, because input lag is not important in the trailer portion, the server computer 200 may process frames in the image quality priority mode, and process frames in the input lag priority mode for the actual game execution portion.

According to an embodiment, the server computer 200 may be configured to receive, from the electronic apparatus 100, the frame processing mode of the content along with the content execution request. That is, the electronic apparatus 100 may be configured to receive, along with the content execution request, a user input for the frame processing mode indicating whether to prioritize image quality or input lag when this content is executed, and transmit the received user input to the server computer 200. In this case, the server computer 200 may be configured to select one of the image quality priority mode and the input lag priority mode according to the frame processing mode received from the electronic apparatus 100.

In operation 430, the server computer 200 may be configured to process frames of the content according to the selected frame processing mode. In detail, when the selected frame processing mode is an image quality processing mode, the server computer 200 may be configured to process the frames of the content according to the image quality processing mode, and when the selected frame processing mode is the input lag priority mode, the server computer 200 may be configured to process the frames of the content according to the input lag priority mode.

According to an embodiment, when the selected frame processing mode is the image quality processing mode, the server computer 200 may be configured to process the frames of the content such that image quality setting information is included for each frame of the content.

According to an embodiment, when the selected frame processing mode is the input lag priority mode, the server computer 200 may be configured to process the frames of the content such that the frames include or do not include image quality setting information in consideration of input latency. Because image quality processing of the frames is important in the image quality processing mode, even when input latency occurs, the server computer 200 is configured to process the frames by including, in each frame, image quality setting information corresponding to each frame. In contrast, because avoiding input latency is more important than processing image quality in the input lag priority mode, with respect to at least one frame, the server computer 200 may process and output the at least one frame without inserting image quality setting information in consideration of input lag time. Also, the server computer 200 may be configured to process the frame such that image quality setting information about a previous frame is inserted into a next frame.

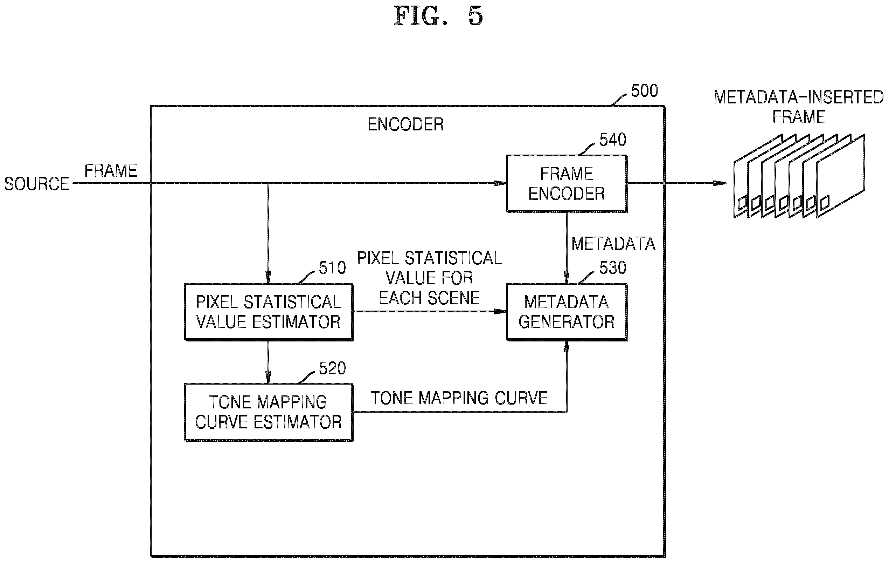

An operation of frame processing in the server computer 200 will be described with reference to FIG. 5.

FIG. 5 shows an example of a configuration of frame processing in a server computer 200, according to an embodiment.

Referring to FIG. 5, the server computer 200 may include an encoder 500 configured to process frames of content. The encoder 500 may be arranged inside the controller 230 in the server computer 200 shown in FIG. 2 or may be separately arranged outside the controller 230.

Referring to FIG. 5, the encoder 500 may include a pixel statistical value estimator 510, a tone mapping curve estimator 520, a metadata generator 530, and a frame encoder 540.

The pixel statistical value estimator 510 may be configured to receive frames of content, perform image analysis of the frames, and derive pixel statistics similar to a histogram.

The tone mapping curve estimator 520 may be configured to define a reference tone mapping curve for each scene. The encoder 500 may selectively include the tone mapping curve estimator 520. Tone mapping may be selectively performed when the maximum brightness of an original image exceeds the maximum brightness expression performance of the electronic apparatus.

The metadata generator 530 may be configured to generate metadata corresponding to each frame based on a pixel statistical value received from the pixel statistical value estimator and the tone mapping curve received from the tone mapping curve estimator. The pixel statistical value and the tone mapping curve may be collectively referred to as image quality setting information. For example, HDR10+ metadata may be stored, referenced, and processed in the form of text files formatted in JSON format. Also, HDR10+ metadata inserted into image files may be easily extracted, reinserted, and processed through a standard tool.

The frame encoder 540 may be configured to output a metadata-inserted frame by inserting, into a frame received from a source, metadata corresponding to the frame on a frame-by-frame basis.

When the frame processing mode is the image quality processing mode, the frame encoder 540 may be configured to generate and output a metadata-inserted frame by inserting, into each frame, metadata corresponding to each frame.

In a case where the frame processing mode is the input lag priority mode, when metadata is not received from the metadata generator 530 during a time period in which a frame needs to be processed as is without input lag, the frame encoder 540 may be configured to output the corresponding frame as is without inserting metadata thereinto. In addition, the frame encoder 540 may be configured to generate a metadata-inserted frame by inserting, into a next frame, metadata generated for a current frame. As described above, the metadata may be pushed one frame at a time, inserted into the next frame, and then output.

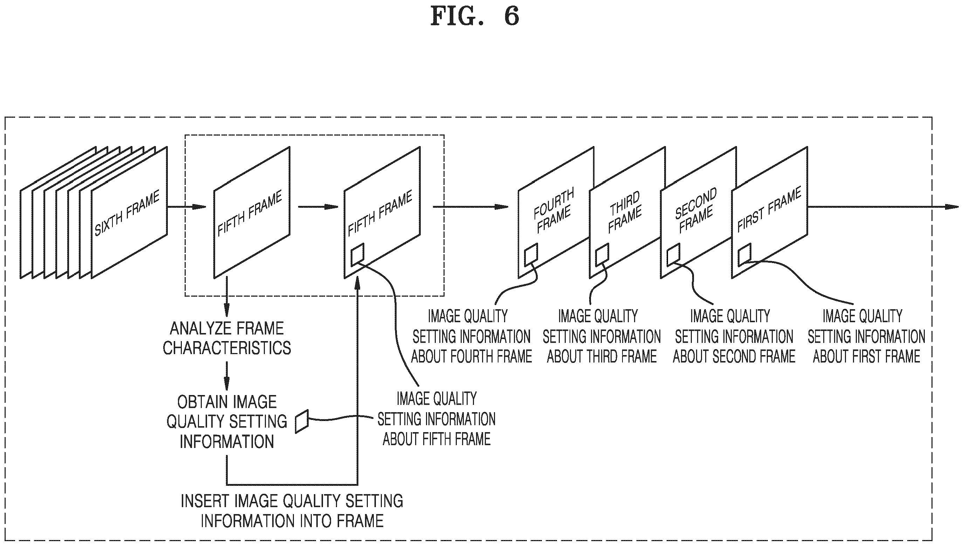

FIG. 6 is a reference diagram for describing an example in which a frame is generated by processing the frame according to an image quality priority mode, according to an embodiment.

Referring to FIG. 6, for example, when a fifth frame is to be processed, the frame encoder 500 may be configured to analyze frame characteristics of the fifth frame and obtain image quality setting information about the fifth frame according to a result of the analysis. In addition, the frame encoder 500 may be configured to generate the fifth frame by inserting, into the fifth frame, the image quality setting information about the fifth frame. In a similar method, like a first frame including image quality setting information about the first frame and a second frame including image quality setting information about the second frame, each frame of content may include image quality setting information corresponding to each frame.

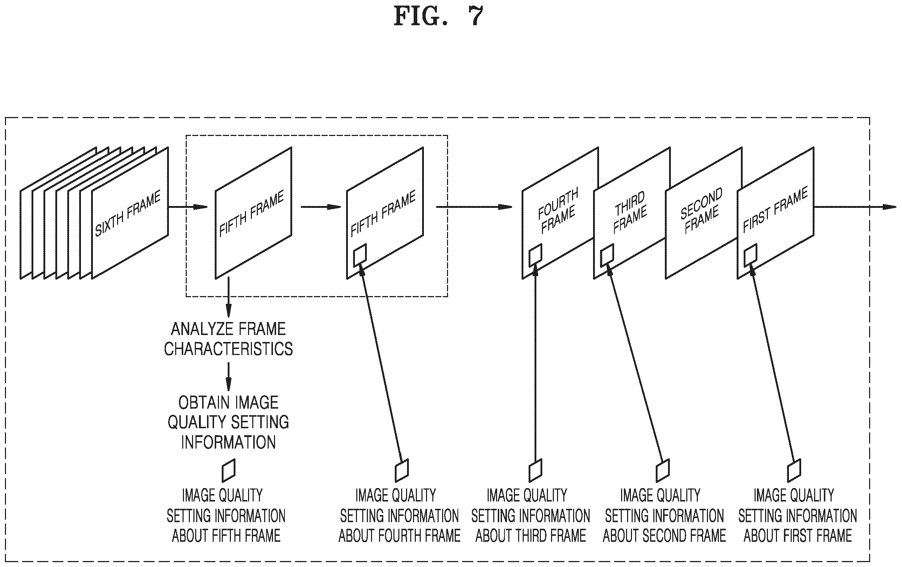

FIG. 7 is a reference diagram for describing an example in which a frame is generated by processing the frame according to an input lag priority mode, according to an embodiment.

Referring to FIG. 7, the frame encoder 500 may be configured to generate a first frame by inserting, into the first frame, image quality setting information about the first frame. Next, during processing of a second frame, when frame processing time is insufficient considering input latency, the frame encoder 500 may be configured to process and generate the second frame without inserting, into the second frame, image quality setting information corresponding to the second frame. In addition, like processing a third frame by inserting image quality setting information about the second frame into the third frame and processing a fourth frame by inserting image quality setting information about the third frame into the fourth frame, the frame encoder 500 may be configured to insert image quality setting information about a current frame into a next frame and process the next frame.

As described above, frames processed according to the input lag priority mode may include at least one frame including image quality setting information and at least one frame not including image quality setting information.

Back to FIG. 4 again, in operation 440, the server computer 200 may be configured to transmit the processed frames of the content to the electronic apparatus 100.

In operation 450, the electronic apparatus 100 may be configured to receive the frames of the content from the server computer 200 and determine whether the frame includes image quality setting information. As a result of the determination, when the frame includes the image quality setting information, operation 460 may be performed, and when the frame does not include the image quality setting information, operation 470 may be performed.

In operation 460, when the frame includes the image quality setting information, the electronic apparatus 100 may be configured to perform image quality processing of the frame by referring to the image quality setting information included in the frame.

In operation 470, when the frame does not include the image quality setting information, the electronic apparatus 100 may compare a current frame with a previous frame and determine whether a change in images exceeds a threshold value.

As a result of the determination, when the change in images in the current frame exceeds the threshold value compared to the previous frame, operation 480 may be performed.

In operation 480, the electronic apparatus 100 may be configured to process the frame without image quality setting information and display the processed frame. That is, when the change in images in the current frame is large compared to the previous frame, applying the same image quality setting information, which was referenced when the previous frame was processed, to the current frame may not be appropriate. Accordingly, in this case, the electronic apparatus 100 may be configured to process the frame without referring to the image quality setting information and display the processed frame.

As a result of the determination, when the change in images in the current frame does not exceed the threshold value compared to the previous frame, operation 490 may be performed.

In operation 490, the electronic apparatus 100 may be configured to process the current frame by referring to image quality setting information corresponding to the previous frame and display the processed frame.

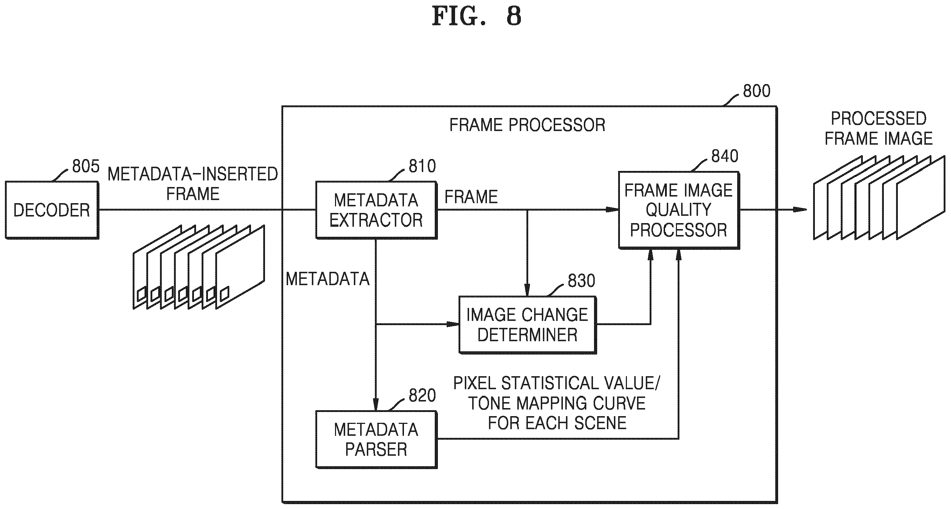

An operation of frame processing in the electronic apparatus 100 will be described with reference to FIG. 8.

FIG. 8 shows an example of a configuration of frame processing in the electronic apparatus 100, according to an embodiment.

Referring to FIG. 8, the electronic apparatus 100 may include a frame processor 800 configured to process frames of content. The frame processor 800 may be arranged inside the controller 140 in the electronic apparatus 100 shown in FIG. 2 or may be arranged inside the video processor 150 shown in FIG. 3.

Referring to FIG. 8, the frame processor 800 may include a metadata extractor 810, a metadata parser 820, an image change determiner 830, and a frame image quality processor 840.

The metadata extractor 810 may be configured to receive a metadata-inserted frame decoded by a decoder 805, extract metadata therefrom, transmit the extracted metadata to the metadata parser 820, and transmit a frame corresponding to an image signal to the frame image quality processor 840. When the metadata extractor 810 fails to detect metadata because a current frame, which is being currently processed, does not include metadata, the metadata extractor 810 may be configured to provide, to the image change determiner 830, a signal indicating that the current frame does not include metadata.

The metadata parser 820 may be configured to receive metadata from the metadata extractor 810 and parse the metadata to obtain image quality setting information. The image quality setting information may include a pixel statistical value and tone mapping curve for each scene. The tone mapping curve is optional and may thus be selectively obtained. The metadata parser 820 may be configured to provide, to the frame image quality processor 840, image quality setting information including the obtained pixel statistical value/tone mapping curve for each scene. When the current frame, which is being currently processed, does not include metadata, the metadata parser 820 may not be configured to receive metadata to be parsed.

When the signal indicating that the current frame does not include metadata is received from the metadata extractor 810, the image change determiner 830 may be configured to receive the current frame output from the metadata extractor 810 and determine whether the current frame has a large change in images compared to the previous frame. In detail, the image change determiner 830 may be configured to determine whether the change in images in the current frame exceeds the threshold value compared to the previous frame. When the image change determiner 830 determines a change between an image of the previous frame and an image of the current frame is determined, various technologies may be used, including peak signal-to-noise ratio (PSNR) that evaluates loss information about image quality of an image, structural similarity index map (SSIM) that evaluates quality in terms of luminance, contrast, and structure, a color histogram, a deep learning model in the field of scene change detection, etc. In addition, the image change determiner 830 may be configured to compare the current frame with the previous frame and provide, to the frame image quality processor 840, a result indicating whether the change in images between the frames exceeds the threshold value.

The frame image quality processor 840 may be configured to perform image quality processing of each frame included in the image signal by referring to metadata corresponding to each frame. Accordingly, the frame image quality processor 840 may be configured to apply, to each frame, a tone mapping procedure optimized for each electronic apparatus. The frame image quality processor 840 may be configured to perform image quality processing of an image corresponding to each frame by referring to a pixel statistical value and tone mapping curve for each scene, which are received from the metadata parser 820.

When a frame processed according to the image quality priority mode is received, the metadata extractor 810 may be configured to extract metadata and transmit the metadata to the metadata parser 820. The frame image quality processor 840 may be configured perform image quality processing of the frame received from the metadata extractor 810 by referring to image quality setting information received from the metadata parser 820, thereby performing image quality processing appropriate for the corresponding frame.

When a frame processed according to the input lag priority mode is received, the metadata extractor 810 may be configured to receive metadata-inserted frame or a frame into which metadata is not inserted. When the metadata-inserted frame is received, the metadata extractor 810 may be configured to extract metadata and transmit the metadata to the metadata parser 820. The frame image quality processor 840 may be configured perform image quality processing of the frame received from the metadata extractor 810 by referring to image quality setting information received from the metadata parser 820, thereby performing image quality processing appropriate for the corresponding frame.

When the frame into which metadata is not inserted is received, the metadata extractor 810 may be configured to transmit, to the image change determiner 830, a signal indicating that there is no metadata corresponding to the current frame. The image change determiner 830 may be configured to compare a change in images between the current frame and the previous frame, which are received from the metadata extractor 810. In addition, when a change in images in the current frame exceeds the threshold value compared to the previous frame, the image change determiner 830 may be configured to transmit a first control signal to the frame image quality processor 840, and when the change in images in the current frame does not exceed the threshold value compared to the previous frame, the image change determiner 830 may be configured to transmit a second control signal to the frame image quality processor 840. When the frame image quality processor 840 receives the first control signal, there is a large change between the image of the current frame and the image of the previous frame, and image quality setting information referenced in the image of the previous frame may not be used. Thus, the frame image quality processor 840 may be configured to process and output the current frame without referring to the image quality setting information. When the frame image quality processor 840 receives the second control signal, the change between the image of the current frame and the image of the previous frame is not large and the images of the current frame and the previous frame are similar, and thus, image quality setting information referenced in the image of the previous frame may be used. Accordingly, when the second control signal is received, the frame image quality processor 840 may be configured to perform image quality processing of the current frame by using image quality setting information about the previous frame and output the current frame.

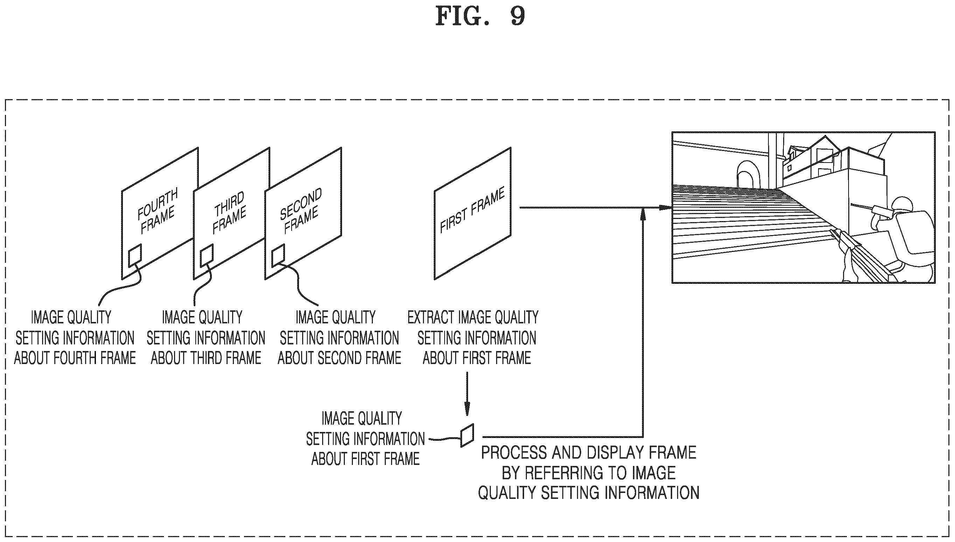

FIG. 9 is a reference diagram for describing an example in which a frame is displayed by processing the frame according to an image quality priority mode, according to an embodiment.

Referring to FIG. 9, each of frames processed according to the image quality priority mode includes, for each frame, image quality setting information about the corresponding frame. Accordingly, for example, when a first frame is to be processed, the frame processor 800 may be configured to extract, from the first frame, image quality setting information about the first frame, perform image quality processing of the extracted first frame by referring to image quality setting information about the first frame, and display the processed first frame. In a similar method, with respect to other frames, the frame processor 800 may also be configured to extract image quality setting information corresponding to each frame, perform image quality processing of the corresponding frame by referring to the extracted image quality setting information, and display the corresponding frame.

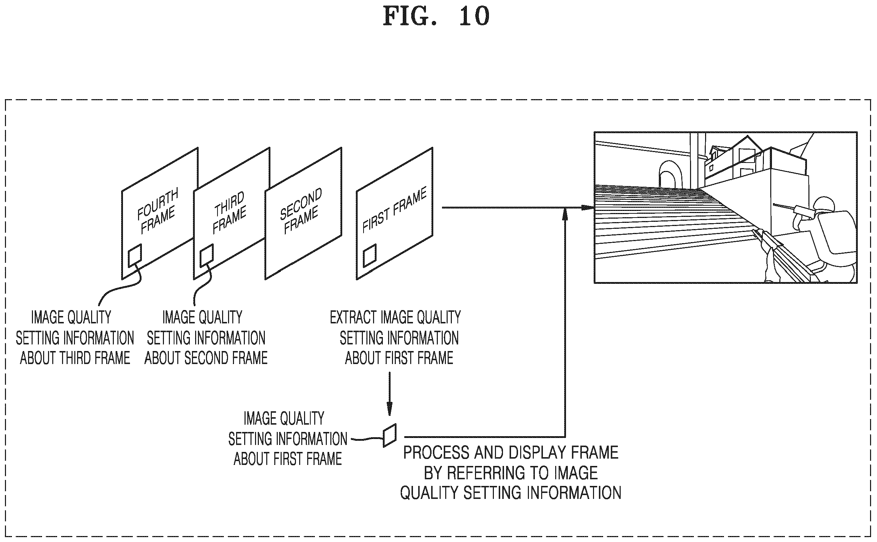

FIG. 10 is a reference diagram for describing an example in which a frame is displayed by processing the frame according to an input lag priority mode, according to an embodiment.

Frames processed according to the input lag priority mode may include at least one frame including image quality setting information and at least one frame not including image quality setting information.

Referring to FIG. 10, frames received by the frame processor 800 may include a first frame, a third frame, and a fourth frame each including image quality setting information, and a second frame not including image quality setting information.

For example, when the first frame is to be processed, the frame processor 800 may be configured to extract, from the first frame, image quality setting information about the first frame, perform image quality processing of the extracted first frame by referring to image quality setting information about the first frame, and display the processed first frame. In a similar method, the frame processor 800 may be configured to extract image quality setting information about the second frame from the third frame, perform image quality processing of the third frame by referring to the extracted image quality setting information, and display the third frame. The frame processor 800 may be configured to extract image quality setting information about the third frame from the fourth frame, perform image quality processing of the fourth frame by referring to the extracted image quality setting information, and display the fourth frame.

When the second frame is processed, the frame processor 800 may be configured to extract image quality setting information from the second frame. In this case, the frame processor 800 may be configured to process the second frame without image quality setting information or perform image quality processing of the second frame by referring to image quality setting information about the first frame. In detail, when the second frame to be processed does not include image quality setting information, the frame processor 800 may be configured to determine how much change has occurred in images between the second frame and the first frame, which is a previous frame. A small change in images may indicate that the image quality processing previously applied to the first frame may be similarly applied to the second frame, and a large change in images may indicate that the image quality processing previously applied to the first frame is difficult to be similarly applied to the second frame. Accordingly, the frame processor 800 may be configured to determine whether a change in images in the second frame exceeds the threshold value compared to the first frame, and when the change does not exceed the threshold value, perform image quality processing of the second frame by referring to the image quality setting information about the first frame, which is the previous frame. When the change in images in the second frame exceeds the threshold value compared to the first frame, the frame processor 800 may be configured to perform image quality processing of the second frame without referring to image quality setting information.

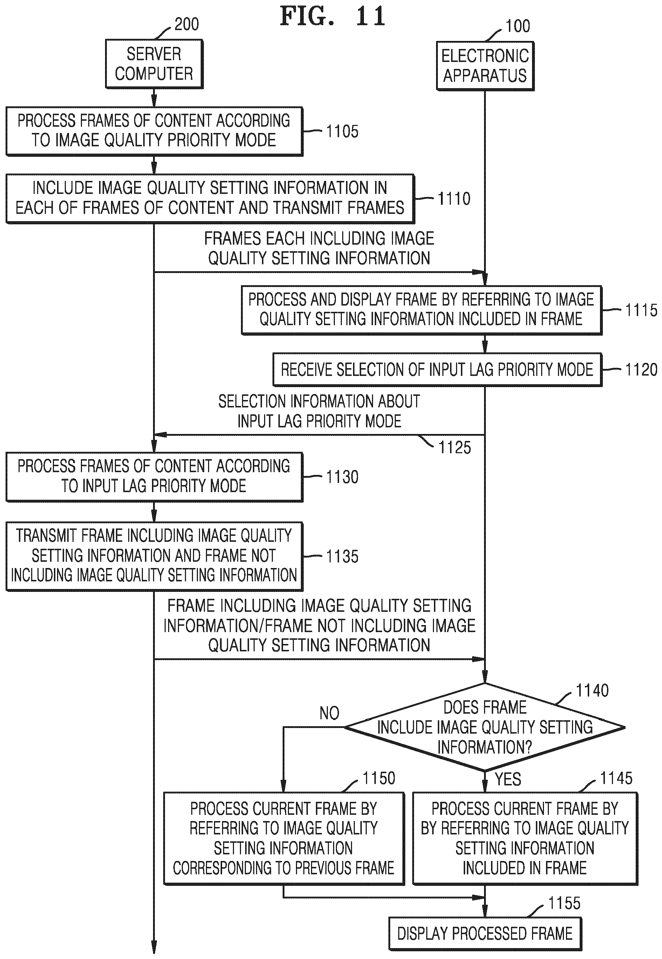

FIG. 11 is a flowchart illustrating an example of operations of a server computer and an electronic apparatus, according to an embodiment.

Referring to FIG. 11, in operation 1105, the server computer 200 may be configured to process frames of content according to an image quality priority mode. For example, the server computer 200 may be configured to determine that image quality needs to be preferentially considered, according to the type of content to be provided to the electronic apparatus 100, and process frames of the content according to the image quality priority mode. Alternatively, the server computer 200 may be configured to receive a request from the electronic apparatus 100 to process the content according to the image quality priority mode and process frames of the content according to the image quality priority mode upon the request.

In operation 1110, the server computer 200 may be configured to include image quality setting information in each of the frames of the content according to the image quality priority mode and transmit the frames to the electronic apparatus 100. Input lag may occur because the frames of the content are processed by including image quality setting information in each of the frames of the content according to the image quality priority mode.

In operation 1115, the electronic apparatus 100 may be configured to process the frames by referring to image quality setting information included in the frames and display the processed frames.

In operation 1120, the electronic apparatus 100 may be configured to receive a selection of an input lag priority mode from a user while the frames of the content are processed and displayed according to the image quality priority mode.

In operation 1125, the electronic apparatus 100 may be configured to transmit selection information about the input lag priority mode to the server computer 200.

In operation 1130, in response to receiving the selection information about the input lag priority mode from the electronic apparatus 100, the server computer 200 may be configured to change a frame processing mode for the frames of the content to the input lag priority mode. That is, when it is difficult to generate frames by including image quality setting information in the frames in consideration of input latency during processing of the frames of the content, the server computer 200 may be configured to output a current frame without inserting image quality setting information and may also be configured to insert image quality setting information generated for the current frame into a next frame and process the next frame.

In operation 1135, the server computer 200 may be configured to transmit, to the electronic apparatus 100, one or more frames including image quality setting information and one or more frames not including image quality setting information according to the input lag priority mode.

In operation 1140, the electronic apparatus 100 may be configured to determine whether the frame received from the server computer 200 includes image quality setting information, and as a result of the determination, when the image quality setting information is included, operation 1145 may be performed.

In operation 1145, the electronic apparatus 100 may be configured to process the frame by referring to image quality setting information included in the frame.

The electronic apparatus 100 may be configured to determine whether the frame received from the server computer 200 includes image quality setting information, and as a result of the determination, when the image quality setting information is not included, operation 1150 may be performed.

In operation 1150, when a change in images in the current frame is not large compared to a previous frame, the electronic apparatus 100 may be configured to perform image quality processing of the current frame by using image quality setting information about the previous frame. When the change in images in the current frame is large compared to the previous frame, the electronic apparatus 100 may be configured to process the frame without referring to the image quality setting information about the previous frame during processing of the current frame.

In operation 1155, the electronic apparatus 100 may be configured to display the processed frame.

Some embodiments of the disclosure may be implemented in the form of a computer-readable recording medium that includes computer-executable instructions such as program modules executed by a computer. The computer-readable recording medium may be any available medium which is accessible by a computer, and may include a volatile or nonvolatile medium and a detachable or non-detachable medium. The computer-readable recording medium may also include a computer storage medium. Examples of the computer storage medium include all volatile and nonvolatile media and separable and non-separable media, which have been implemented by an arbitrary method or technology, for storing information such as computer-readable instructions, data structures, program modules, and other data.

Embodiments of the disclosure may be implemented with a software (S/W) program including instructions stored in a computer-readable storage medium.

The computer is an apparatus capable of calling out instructions stored in a storage medium and operating under the instructions as in the embodiments of the disclosure, and may include an electronic apparatus according to the embodiments of the disclosure.

The computer-readable storage medium may be provided in the form of a non-transitory storage medium. In this regard, 'non-transitory' means that the storage medium does not include a signal and is tangible, but does not distinguish whether data is stored semi-permanently or temporarily in the storage medium.

Furthermore, the control methods according to embodiments of the disclosure may be included and provided in a computer program product. The computer program product may be traded as a product between a seller and a buyer.

The computer program product may include an S/W program and a computer-readable storage medium in which the S/W program is stored. For example, the computer program product may include an S/W program product (e.g., a downloadable application) electronically distributed by a manufacturing company of the device or an electronic market (e.g., Google Play Store or App Store). For electronic distribution, at least a portion of the S/W program may be stored in a storage medium or temporarily generated. In this case, the storage medium may be a server of the manufacturer, a server of the electronic market, or a storage medium of a relay server that temporarily stores the S/W program.

In a system including a server and a device, the computer program product may include a storage medium of the server or a storage medium of the device. Alternatively, when there is a third apparatus (e.g., a smartphone) connected through communication with the server or the device, the computer program product may include a storage medium of the third apparatus. In another example, the computer program product may include a software program itself that is transmitted from the server to the device or the third apparatus or transmitted from the third apparatus to the device.

In this case, one of the server, the device, and the third apparatus may execute the computer program product to perform the method according to the embodiments of the disclosure. Alternatively, two or more of the server, the device, and the third apparatus may execute the computer program product to perform the method according to the embodiments of the disclosure in a distributed fashion.

For example, the server (e.g., a cloud server or an artificial intelligence server) may execute the computer program product stored therein to control the device connected through communication with the server to perform the method according to the embodiments of the disclosure.

In another example, the third apparatus may execute the computer program product to control the device connected through communication with the third apparatus to perform the method according to the embodiments of the disclosure. When the third apparatus executes the computer program product, the third apparatus may download the computer program product and execute the downloaded computer program product. Alternatively, the third apparatus may execute the computer program product that is preloaded to perform the method according to the embodiments of the disclosure.

In the present specification, the term "...or/er" may refer to a hardware component such as a processor or a circuit, and/or a software component executed by the hardware component such as a processor.

While the embodiments of the disclosure have been particularly shown and described, it will be understood by one of ordinary skill in the art that various changes in form and details may be made therein without departing from the spirit and scope of the disclosure. Therefore, it should be understood that the embodiments of the disclosure described above should be considered in a descriptive sense only and not for purposes of limitation. For example, each component described in a single type may be executed in a distributed manner, and components described distributed may also be executed in an integrated form.

The scope of the disclosure is not defined by the detailed description of the disclosure but by the following claims, and all modifications or alternatives derived from the scope and spirit of the claims and equivalents thereof fall within the scope of the disclosure.

## Claims

1. An electronic apparatus comprising:
a communication interface;
a memory to store one or more instructions; and
a processor configured to execute the one or more instructions stored in the memory to,
receive, from a server computer, at least one frame including image quality setting information and/or at least one frame not including the image quality setting information, according to a frame processing mode selected from among an image quality priority mode in which content is processed by preferentially considering image quality over input lag time of the content and an input lag priority mode in which the content is processed by preferentially considering the input lag time over the image quality of the content,
with respect to the at least one frame including the image quality setting information, process a corresponding frame by referring to the image quality setting information included in the at least one frame and display the processed frame, and
with respect to the at least one frame not including the image quality setting information, process the at least one frame not including the image quality setting information, by referring to image quality setting information about a previous frame of the at least one frame not including the image
quality setting information, and display the at least one processed frame.

2. The electronic apparatus of claim 1, wherein
the processor is configured to execute the one or more instructions to,
in response to the selected frame processing mode being the image quality priority mode, receive frames, each frame including image quality setting information, and process a corresponding frame by referring to the image quality setting information included in each of the frames.

3. The electronic apparatus of claim 1, wherein
the processor is configured to execute the one or more instructions to,
in response to the selected frame processing mode being the input lag priority mode, receive, from the server computer, at least one first frame not including the image quality setting information and at least one second frame including the image quality setting information,
with respect to the at least one second frame including the image quality setting information, process the at least one second frame by referring to the image quality setting information included in the at least one second frame, and
with respect to the at least one first frame not including the image quality setting information, process the at least one first frame by referring to image quality setting information about a previous frame of the at least one first frame.

4. The electronic apparatus of claim 3, wherein
the image quality setting information included in the at least one second frame is image quality setting information generated corresponding to the at least one second frame or is image quality setting information generated corresponding to a previous frame of the at least one second frame.

5. The electronic apparatus of any one of claims 1 to 4, wherein
the processor is configured to execute the one or more instructions to transmit, to the server computer, a user input of selecting one from among the image quality priority mode and the input lag priority mode.

6. A server computer comprising:
a communication interface;
a memory to store one or more instructions; and
a processor configured to execute the one or more instructions stored in the memory to
select, as a frame processing mode, one from among an image quality priority mode in which content is processed by preferentially considering image quality over input lag time of the content and an input lag priority mode in which the content is processed by preferentially considering the input lag time over the image quality of the content,
in response to the image quality priority mode being selected as the frame processing mode, prepare a frame including image quality setting information generated corresponding to each frame of the content,
in response to the input lag priority mode being selected as the frame processing mode, with respect to each frame of the content, prepare at least one frame not including the image quality setting information, and
transmit, through the communication interface, the frames of the content prepared according to the selected frame processing mode.

7. The server computer of claim 6, wherein
the processor is configured to execute the one or more instructions to,
in response to the input lag priority mode being selected as the frame processing mode,
generate at least one first frame not including the image quality setting information and at least one second frame including image quality setting information generated corresponding to a previous frame.

8. The server computer of claim 6 or 7, wherein
the processor is configured to execute the one or more instructions to receive, from the electronic apparatus, through the communication interface, an input of selecting one from among the image quality priority mode and the input lag priority mode.

9. An operating method of an electronic apparatus, the operating method comprising:
receiving, from a server computer, at least one frame including image quality setting information and/or at least one frame not including the image quality setting information, according to a frame processing mode selected from among an image quality priority mode in which content is processed by preferentially considering image quality over input lag time of the content and an input lag priority mode in which the content is processed by preferentially considering the input lag time over the image quality of the content;
with respect to the at least one frame including the image quality setting information, processing a corresponding frame by referring to the image quality setting information included in the at least one frame, and
displaying the processed frame; and
with respect to the at least one frame not including the image quality setting information, processing the at least one frame not including the image quality setting information, by referring to image quality setting information about a previous frame of the at least one frame not including the image quality setting information, and displaying the at least one processed frame.

10. The operating method of claim 9, further comprising,
in response to the selected frame processing mode being the image quality priority mode, receiving frames, each frame including image quality setting information, and processing a corresponding frame by referring to the image quality setting information included in each of the frames.

11. The operating method of claim 9, further comprising:
in response to the selected frame processing mode being the input lag priority mode, receiving, from the server computer, at least one first frame not including the image quality setting information and at least one second frame including the image quality setting information;
with respect to the at least one second frame including the image quality setting information, processing the at least one second frame by referring to the image quality setting information included in the at least one second frame; and
with respect to the at least one first frame not including the image quality setting information, processing the at least one first frame by referring to image quality setting information about a previous frame of the at least one first frame.

12. The operating method of claim 11, wherein
the image quality setting information included in the at least one second frame is image quality setting information generated corresponding to the at least one second frame or is image quality setting information generated corresponding to a previous frame of the at least one second frame.

13. The operating method of any one of claims 9 to 12, further comprising
transmitting, to the server computer, a user input of selecting one from among the image quality priority mode and the input lag priority mode.

14. An operating method of a server computer, the operating method comprising:
selecting, as a frame processing mode, one from among an image quality priority mode in which content is processed by preferentially considering image quality over input lag time of the content and an input lag priority mode in which the content is processed by preferentially considering the input lag time over the image quality of the content;
in response to the image quality priority mode being selected as the frame processing mode, preparing a frame including image quality setting information generated corresponding to each frame of the content;
in response to the input lag priority mode being selected as the frame processing mode, with respect to each frame of the content, preparing at least one frame not including the image quality setting information; and
transmitting, through the communication interface, the frames of the content prepared according to the selected frame processing mode.

15. A computer-readable recording medium having recorded thereon a program comprising one or more instructions to implement an operating method of an electronic apparatus on a computer, the operating method of the electronic apparatus comprising:
receiving, from a server computer, at least one frame including image quality setting information and at least one frame not including the image quality setting information, according to a frame processing mode selected from among an image quality priority mode in which content is processed by preferentially considering image quality over input lag time of the content and an input lag priority mode in which the content is processed by preferentially considering the input lag time over the image quality of the content;
with respect to the at least one frame including the image quality setting information, processing a corresponding frame by referring to the image quality setting information included in the at least one frame, and
displaying the processed frame; and
with respect to the at least one frame not including the image quality setting information, processing the at least one frame not including the image quality setting information, by referring to image quality setting information about a previous frame of the at least one frame not including the image quality setting information, and displaying the at least one processed frame.
